# EUROPÄISCHE PATENTSCHRIFT

(11) **EP 1 282 797 B1**
(45) Veröffentlichungstag und Bekanntmachung des Hinweises auf die Patenterteilung: **08.06.2005**
(21) Anmeldenummer: 01931191.9
(22) Anmeldetag: 15.05.2001
(51) Int. Cl.: F16K 17/30, F16K 1/12

(54) **SICHERHEITSSCHLIESSVORRICHTUNG FÜR GASROHRLEITUNGEN**
SAFETY CUT-OUT DEVICE FOR GAS PIPELINES
OBTURATEUR DE SECURITE POUR CONDUITES DE GAZ

(30) Priorität: 16.05.2000 AT 8542000
(43) Veröffentlichungstag der Anmeldung: 12.02.2003
(73) Patentinhaber: Pipelife Austria GmbH & CO. KG, 2355 Wr. Neudorf (AT)
(72) Erfinder: MASLOFF, Peter, A-7061 Trausdorf (AT)
(74) Vertreter: Haffner, Thomas M.
(86) Internationale Anmeldenummer: PCT/AT2001/000143
(87) Internationale Veröffentlichungsnummer: WO 2001/088420

(56) Entgegenhaltungen:
- DE-A- 2 924 533
- DE-C- 814 826
- US-A- 2 821 209

## Beschreibung

Die Erfindung bezieht sich auf eine Sicherheitsschließvorrichtung für Gasrohrleitungen mit einem entgegen der Kraft einer Feder verschieblichen Ventilschließglied, welches gegen einen Ventilsitz in einem rohrförmigen Gehäuse mit einem Gaszuleitungsanschluß preßbar ist, wobei das Ventilschließglied mit einem Ringbord bzw. Ringflansch an der dem Ventilsitz abgewandten Seite ausgebildet ist, das Gehäuse oder ein mit dem Gehäuse verbundener Teil einen ringförmigen Anschlag aufweist, zwischen dem Ringbord des Ventilschließgliedes und dem ringförmigen Anschlag eine Schraubenfeder angeordnet ist, das Ventilschließglied mit seinem Ringbord und in dem dem ringförmigen Anschlag benachbarten Bereich im Gehäuse geführt ist und der Gaszuleitungsanschluß an der dem Ventilsitz abgewandten Seite der Stirnfläche des Ventilschließgliedes mündet.

Eine Einrichtung der eingangs genannten Art ist beispielsweise in Form einer Schlauchbruchsicherung aus der DE 29 24 533 bekannt geworden. Sicherheitsschließvorrichtungen für Gasrohrleitungen sind in der EP 491 027 bzw. in der WO 92/01184 beschrieben. Bei Gasverrohrungen kommt es im Zuge von Straßenbauarbeiten oder aber auch im Zuge von Bauarbeiten an Gebäuden häufig zu einem unbeabsichtigten Beschädigen des Rohrleitungssystemes. In solchen Fällen kann es zu einem unbeabsichtigten Austreten von Gas und damit zu einer Explosionsgefahr kommen. An Gasleitungssysteme sind Verbraucher wie beispielsweise Heizungsanlagen angeschlossen, welche entsprechend dem jeweiligen Wärmebedarf für die nachgeschalteten Heizungseinrichtungen Gas aus dem Leitungsnetz beziehen sollen. Eine Überwachung derartiger Gasleitungen über einen Gaszähler ist insofern nicht zielführend, da Heizungsanlagen in Abhängigkeit von der Außentemperatur bei tieferen Temperaturen über einen längeren Zeitraum und damit insgesamt mit einer größeren Gasmenge versorgt werden müssen, als bei höheren Außentemperaturen. Bei einem Bruch bzw. einer Zerstörung des Rohrleitungssystemes tritt aber auch hier verbraucherseitig ein Druckabfall auf.

Die bekannte Sicherheitsschließeinrichtung für Gasrohrleitungen sollte es ermöglichen, Beschädigungen im Rohrleitungssystem zu erkennen, ohne ein vorzeitiges Verschließen der Gasleitungen zu bewirken, wenn ein Verbraucher über einen längeren Zeitraum oder aber kurzfristig eine Mehrzahl von Verbrauchern die ihrer Leistung entsprechende Gasmenge benötigen. Die Erfindung zielt nun darauf ab, eine derartige Sicherheitsschließvorrichtung für die Absicherung von Ein- und Mehrfamilienhäusern geeignet zu machen, bei welchen eine größere Anzahl von Verbrauchern zu unregelmäßigen Zeitpunkten Gas aus dem Gasrohrleitungsnetz bezieht. Insbesondere soll die erfindungsgemäße Ausbildung unabhängig von der jeweiligen Dimensionierung, d.h. unabhängig von der jeweils pro Stunde zulässigen maximalen Verbrauchermenge auf einen vorbestimmten definierten kleinen Differenzdruck ansprechen, welcher sicher als Rohrleitungsdefekt erkannt werden kann und nicht einer plötzlichen gleichzeitigen Entnahme einer größeren Gasmenge durch eine Mehrzahl von Verbrauchern entspricht. Weiters soll die erfindungsgemäße Ausbildung dahingehend verbessert werden, daß sie auf kleinere Differenzdrucke zuverlässig und reproduzierbar anspricht und sich durch eine höhere Betriebssicherheit und einen geringen Wartungsaufwand auszeichnet, wobei insbesondere Ablagerungen von mikroskopischen Teilchen im Gas an der Feder mit Sicherheit vermieden werden sollen.

Zur Lösung dieser Aufgabe besteht die erfindungsgemäße Einrichtung der eingangs genannten Art im wesentlichen darin, daß das Ventilschließglied als hohlzylindrischer Körper ausgebildet ist und mit seinem Umfang im Gehäuse bzw. an dem den ringförmigen Anschlag tragenden Teil geführt ist, wobei zwischen dem ringförmigen Anschlag des Gehäuses und dem Ringbord bzw. Ringflansch des Ventilschließgliedes eine geschlossene Ringkammer ausgebildet ist, in welcher die Schraubenfeder angeordnet ist, daß die dem Ventilsitz zugewandte Stirnfläche des Ventilschließgliedes konisch und/oder ballig gewölbt ausgebildet ist und radial außerhalb des Ventilsitzes axiale Durchbrechungen aufweist und daß die Sitzflächen des Ventilsitzes hohlkonisch ausgebildet sind. Wesentlich für die gewünschte Ansprechempfindlichkeit ist es im Rahmen der erfindungsgemäßen Ausbildung, daß das Ventilschließglied ein hohes Maß an Festigkeit und gleichzeitig ein möglichst geringes Gewicht aufweist. Dadurch, daß nun ein Ventilschließglied als hohlzylindrischer Körper ausgebildet wird und der Gaszuleitungsanschluß an der dem Ventilsitz abgewandten Seite der Stirnfläche des Schließgliedes mündet und weiters radial außerhalb der Dichtfläche des Ventilsitzes axiale Durchbrechungen vorgesehen sind, kann ein besonders leichtbauendes Ventilschließglied zum Einsatz gelangen, welches nur geringe bewegte Massen aufweist. Gleichzeitig erlaubt es eine derartige Ausbildung des Ventilschließgliedes das Ventilschließglied auch strömungstechnisch so weit zu optimieren, daß es unabhängig von der Dimensionierung bzw. der maximal zulässigen Gasdurchflußmenge auf überaus geringe und konstante Differenzdruckwerte anspricht. Das Ventilschließglied läßt sich aufgrund der gewählten hohlzylindrischen Ausbildung auch besonders einfach in einem Gehäuse axial verschlieblich führen, sodaß Reibungskräfte gering gehalten werden können und insbesondere Schrägstellungen oder Verkantungen des Ventilschließgliedes ausgeschlossen werden können.

Durch die hohlzylindrische Ausführung des Ventilschließgliedes wird das Ventilschließglied mit seinem Umfang im Gehäuse bzw. an dem den ringförmigen Anschlag tragenden Teil geführt, sodaß dadurch daß das Ventilschließglied ebenso wie das Gehäuse jeweils ein Ringbord bzw. Ringflansch bzw. einen ringförmigen Anschlag tragen, zwischen dem ringförmigen Anschlag des Gehäuses und dem Ringbord bzw. Ringflansch des Ventilschließgliedes eine geschlossene Ringkammer ausgebildet wird. In der geschlossenen Ringkammer läßt sich eine Schraubenfeder unterbringen, welche selbst wiederum, da sie nun auf relativ großem Durchmesser nahe der Innenwand des Gehäuses angeordnet ist, bei überaus geringem Gewicht ein hohes Maß an reproduzierbarer Federkraft aufweisen kann, wobei es von wesentlicher Bedeutung ist, daß die Ringkammer hierbei derart abgedichtet ist, daß keine die Federcharakteristik verändernden mikroskopischen Teilchen eindringen können. Insgesamt gelingt es somit bei geringem herstellungstechnischen Aufwand ein hohes Maß an Reproduzierbarkeit und eine exakte Einstellbarkeit und ein definiertes Ansprechverhalten auch bei unterschiedlich maximal zulässigen Abnahmegasmengen sicherzustellen.

Die erfindungsgemäße Ausbildung ist hiebei so getroffen, daß die dem Ventilsitz zugewandte Stirnfläche des Ventilschließ-gliedes konisch und/oder ballig gewölbt ausgebildet ist und daß die Sitzflächen des Ventilsitzes hohlkonisch ausgebildet sind, wobei insbesondere eine ballig gewölbte Ausbildung der Stirnfläche des Ventilschließgliedes strömungstechnisch besonders vorteilhaft ist. Die ballige Ausbildung führt zu einem im wesentlichen konkaven zentralen Bereich, in welchem die Dichtflächen angeordnet sind, welche mit den hohlkonischen Sitzflächen des Ventilsitzes zusammenwirken, sodaß bei zulässigen geringen Druckverlusten beim Einschalten von Großverbrauchern ein Schließen verhindert werden kann.

Mit Vorteil ist die Ausbildung hiebei so getroffen, daß die dem Ventilsitz zugewandte Stirnfläche des Ventilschließgliedes eine ringförmige Dichtfläche, insbesondere einen Elastomerring, trägt, wodurch eine definierte dichtende Anlage gewährleistet ist, sobald die voreingestellte Druckdifferenz überschritten wird.

Um eine exakte Führung des hohlzylindrischen Ventilschließgliedes im Gehäuse zu erleichtern und sicherzustellen, daß die zwischen dem ringförmigen Anschlag des Gehäuses und dem Ringbord bzw. Ringflansch des Ventilschließgliedes ausgebildete Ringkammer ausreichend abgedichtet ist, ist mit Vorteil die Ausbildung so getroffen, daß die radiale Höhe des ringförmigen Anschlages des Gehäuses im wesentlichen der radialen Höhe des Ringbordes bzw. des Ringflansches des hohlzylindrischen Ventilschließgliedes entspricht. Auf diese Weise wird das hohlzylindrische Ventilschließglied an den radialen Stirnflächen des Ringbordes bzw. Ringflansches sowie des ringförmigen Anschlages des Gehäuses gegen radiale Verschiebung gesichert geführt und exakt axial geführt, wodurch Reibungsverluste minimiert werden.

Gemäß einer weiteren bevorzugten Ausgestaltung der erfindungsgemäßen Sicherheitsschließvorrichtung ist die Ausbildung so getroffen, daß der ringförmige Anschlag des Gehäuses von einem im Gehäuse axial verschiebbaren und festlegbaren, insbesondere schraubbaren, Stellring gebildet ist. Ein derartiger Stellring erlaubt es unter Verwendung einer einzigen Feder für unterschiedliche Ausbildungen die jeweils gewünschte Ventilschließkraft bzw. den jeweils für das Schließen erforderlichen Differenzdruck durch Vorspannen der Feder zu variieren und den jeweiligen Bedürfnissen anzupassen. Auf diese Weise wird eine einfache Justierung und eine exakte Einstellung des jeweils geforderten Differenzschließdruckes erreicht. In der zwischen dem ringförmigen Anschlag des Gehäuses und dem Ringbord bzw. Ringflansch des Ventilschließgliedes ausgebildeten geschlossenen Ringkammer ist eine Schraubenfeder angeordnet, wobei eine derartige Schraubenfeder, wie bereits eingangs erwähnt, aufgrund ihres relativ großen Durchmessers aus relativ dünnem Federstahldraht ausgebildet sein kann und dadurch selbst wiederum bei relativ geringer Masse ein hohes Maß an reproduzierbarer Federkraft ergibt. Die Ringkammer ist hierbei derart abgedichtet, daß keine die Federcharakteristik verändernden mikroskopischen Teilchen eindringen können.

Zur Optimierung der Strömungsverhältnisse im Bereich der im wesentlichen zentralen axialen Durchbrechung des Ventilsitzes, an welchem dann die Verbraucherleitungen angeschlossen sind, ist die Ausbildung mit Vorteil so getroffen, daß die Erzeugenden der hohlkonischen Wand des Ventilsitzes einen spitzen Winkel αmiteinander einschließen, der kleiner oder gleich ist als der von den Erzeugenden der Stirnwand des Ventilschließgliedes im Bereich der Durchbrechungen außerhalb der Dichtflächen eingeschlossene spitze Winkel β, wobei eine derartige Ausbildung die Empfindlichkeit für Fehlauslösungen wegen gleichzeitiger Einschaltung von Großverbrauchern wesentlich herabsetzt.

Häufig werden Sicherheitsschließvorrichtungen für Gasrohrleitungen auch in verzweigten Versorgungsnetzen eingesetzt, sodaß je nach Abnahmemengen an den einzelnen Verbraucherstellen bzw. je nach Druckverhältnissen im verzweigten Netz die Sicherheitsschließvorrichtungen nicht nur in einer sondern in beiden Richtungen durchströmt werden. Um die Strömungsverhältnisse insgesamt zu verbessern und um insbesondere ein möglichst druckverlustfreies Durchströmen der Schließvorrichtung in der der Normdurchflußrichtung entgegengesetzten Richtung zu gewährleisten, ist die Ausbildung hierbei in bevorzugter Weise so getroffen, daß an der dem Ventilsitz abgewandten Seite der Stirnfläche des Ventilschließgliedes ein konischer und/oder ballig gewölbter Anströmkörper angeordnet ist. Ein derartiger konischer oder ballig gewölbter Anströmkörper verhindert, daß bei einer entgegen der Normdurchflußrichtung durchströmten Schließvorrichtung turbulente Strömungsverhältnisse auftreten, sodaß auch in dieser Durchflußrichtung der Druckverlust möglichst gering gehalten werden kann. Die Strömungsverhältnisse können am verbraucherseitigen Anschluß der Sicherheitsschließvorrichtung noch dadurch weiter verbessert werden, daß, wie es einer bevorzugten Ausbildung entspricht, der lichte Durchtrittsquerschnitt des Ventilsitzes kleiner ist als die lichte Querschnittsfläche an der dem Ventilschließglied abgewandten Seite des Ventilsitzes.

Wie bereits eingangs erwähnt, kommt durch die hohl-zylindrische Ausführung ein besonders leichtbauendes Ventilschließglied zum Einsatz, welches nur geringe bewegte Massen aufweist. Ein besonders leichtes Ventilschließglied hat hierbei den Vorteil, daß unabhängig von der jeweiligen Einbaulage der Sicherheitsschließvorrichtung möglichst gleichbleibende Schließdrücke eingehalten werden können. Das Ventilschließglied soll somit möglichst dünnwandig ausgeführt werden, wobei in bevorzugter Weise die Ausbildung so getroffen ist, daß die Wandstärke des hohlzylindrischen Körpers des Ventilschließgliedes weniger als 1/10, vorzugsweise weniger als 1/20, des Durchmessers des hohlzylindrischen Körpers beträgt. Es kann somit eine Schraubenfeder aus relativ dünnem Federstahldraht Verwendung finden, welche bei relativ geringer Masse ein hohes Maß an reproduzierbarer Federkraft aufweist. Dadurch kann die Sicherheitsschließvorrichtung auch im Niederdruckbereich eingesetzt werden, da ein Schließen der Schließvorrichtung bereits bei einem Differenzdruck zwischen 3 und 6 mbar bewirkt wird. Bei höheren Betriebsdrücken ist ein Schließen bei Druckdifferenzen zwischen 20 und 60 mbar wünschenswert, und es ist die Schraubenfeder daher bevorzugt für einem Differenzdruck von zwischen 3 und 60 mbar entsprechende Federkräfte ausgelegt.

Insgesamt kann die erfindungsgemäße Sicherheitsschließvorrichtung bei jeweils angepaßter Dimensionierung für Betriebsdrücke zwischen 20 mbar bis 10 bar eingesetzt werden, wobei in einem Druckbereich unter 0,3 bar Durchflußmengen von kleiner als 600 Nm³/h und beispielsweise bei einem Betriebsdruck von 10 bar Durchflußmengen von bis zu 1800 Nm³/h erzielbar sind. In geöffnetem Zustand der Schließvorrichtung dürfen nur geringe Druckverluste auftreten, wobei mit der erfindungsgemäßen Schließvorrichtung im Niederdruckbereich, d. h. bei Betriebsdrücken von beispielsweise 20 mbar, Druckverluste von kleiner als 1 mbar auftreten dürfen, um ein sicheres Schließverhalten bei Druckdifferenzen von 3 bis 6 mbar zu gewährleisten. Bei höheren Betriebsdrücken sollen die Druckverluste kleiner als 20 mbar gehalten werden, um ein Schließen bei Druckdifferenzen von 30 bis 50 mbar sicherzustellen.

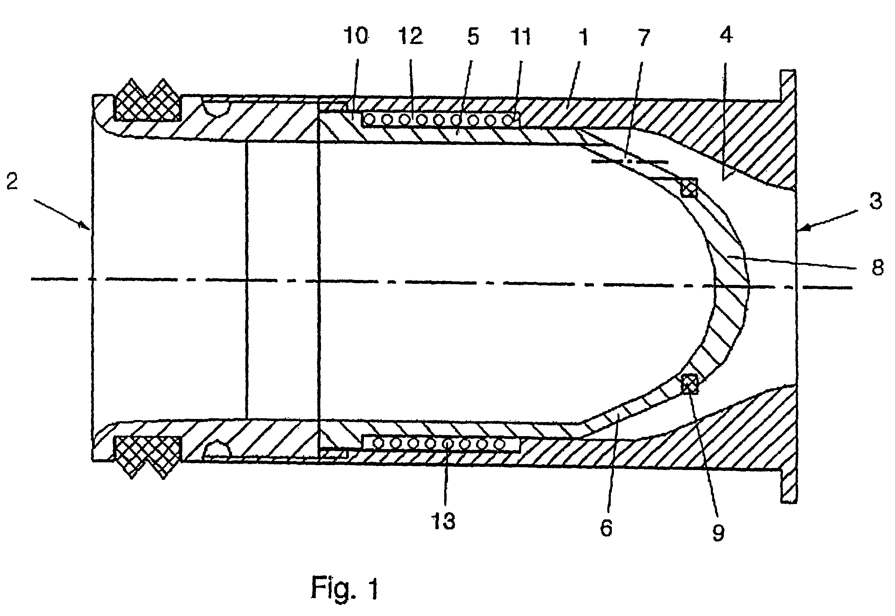

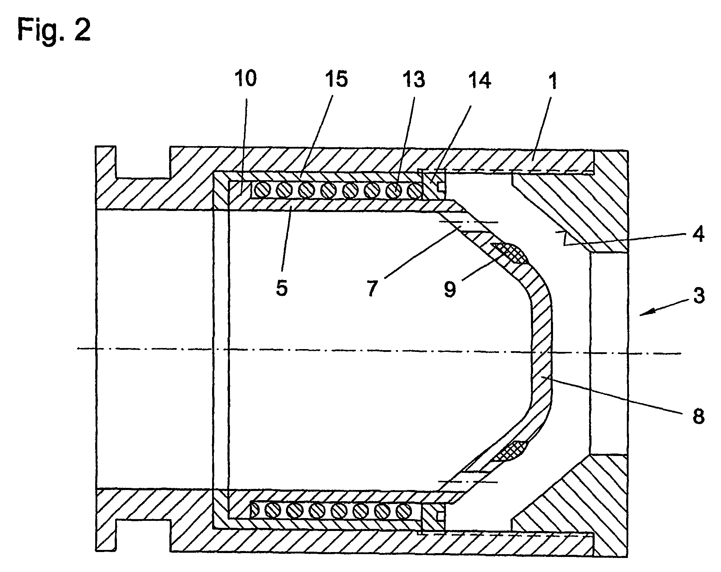

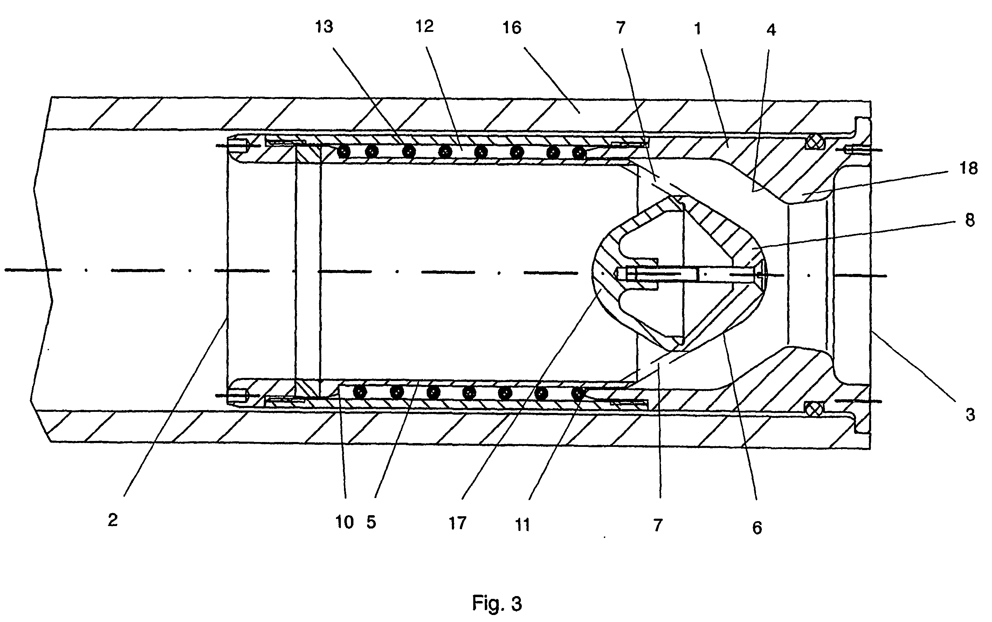

Die Erfindung wird nachfolgend anhand von in der Zeichnung schematisch dargestellten Ausführungsbeispielen näher erläutert. In dieser zeigen Fig. 1 einen Querschnitt durch eine erste Ausbildung der erfindungsgemäßen Sicherheitsschließvorrichtung, Fig. 2 einen Schnitt durch eine abgewandelte Ausbildung entsprechend der Fig. 1 und Fig. 3 einen Querschnitt durch eine weitere abgewandelte Ausbildung.

In Fig. 1 ist das Gehäuse der Sicherheitsschließvorrichtung mit 1 bezeichnet. Der Gaszuleitungsanschluß mündet an der Stirnfläche 2, wobei die dem Gaszuleitungsanschluß abgewandte Stirnfläche 3 einen hohlkonischen Ventilsitz 4 aufweist. Das Ventilschließglied 5 ist als hohlzylindrischer Körper ausgebildet, dessen Stirnfläche in einem ersten Teilbereich 6 geradlinige Erzeugende aufweist, welche einen Konus definieren. In diesem Bereich sind axiale Durchbrechnungen 7 vorgesehen, über welche bei geöffnetem Ventilschließglied Gas von der Gaszuleitung in die an die Stirnfläche 3 angeschlossenen Verbraucherleitungen strömen kann. Der mittlere Bereich der Stirnfläche des Ventilschließgliedes 5 ist mit 8 bezeichnet und im wesentlichen ballig gewölbt ausgebildet, wobei am Übergang zwischen diesem mittleren Bereich 8 des Ventilschließgliedes und den seitlichen Bereichen 6, welche die Durchbrechungen 7 tragen, ein Dichtring 9 angeordnet ist. Das Ventilschließglied 5 weist nun einen radialen Ringbord bzw. Ringflansch 10 auf, wohingegen das Gehäuse 1 einen ringförmigen Gegenanschlag 11 trägt. In die zwischen den Anschlägen 10 und 11 ausgebildete Ringkammer 12 ist nun eine Schraubenfeder 13 eingesetzt. Das Ventilschließglied 5 schließt somit entgegen der Kraft dieser Schraubenfeder 13 bei Überschreiten eines vorbestimmten Differenzdruckes.

Bei der Ausbildung nach Fig. 2 wurden die Bezugszeichen, wie sie in Fig. 1 gewählt wurden, beibehalten. Der gehäusefeste ringförmige Anschlag 11 ist hier in einem gesonderten Stellring 14 angeordnet, welcher selbst im Inneren des Gehäuses 1 verschraubt werden kann. Durch Verstellung der Position des Stellringes 14 läßt sich somit die Federkraft der Feder 13 entsprechend justieren, wobei hier ein entsprechend dichtendes Abschlußorgan 15 angeordnet werden kann.

In Fig. 3 sind gleiche Teile wiederum mit denselben Bezugszeichen gekennzeichnet, wobei die Sicherheitsschließvorrichtung hier in einem Gasrohr 16 eingebaut dargestellt ist. Im Unterschied zu der Ausbildung gemäß Fig. 1 ist nun an der dem Ventilsitz 4 abgewandten Seite der Stirnfläche des Ventilschließgliedes 5 ein konischer Anströmkörper 17 angeordnet, welcher symmetrisch zur dem Ventilsitz 4 zugewandten konischen bzw. ballig gewölbten Stirnfläche des Ventilschließgliedes 5 ausgebildet ist. Weiters ist in Fig. 3 ersichtlich, daß das Gehäuse 1 im an den Ventilsitz 4 in Normdurchflußrichtung anschließenden Bereich mit einem Düseneinsatz 18 ausgebildet ist, sodaß der lichte Durchtrittsquerschnitt des Ventilsitzes 4 kleiner ist als die lichte Querschnittsweite an der dem Ventilschließglied 5 abgewandten Seite des Ventilsitzes 4.

Mit allen Konstruktionen wird gleichzeitig der Vorteil erreicht, daß die Feder nicht unmittelbar mit dem Gas im Gasleitungsnetz in Kontakt gelangt, sodaß Ablagerungen von mikroskopischen Teilchen im Gas an der Feder mit Sicherheit vermieden werden können. Es wird dadurch die Langzeitstabilität der Feder wesentlich verbessert, da mit Rücksicht auf die relativ geringen Massen bereits geringste Ablagerungen von mikroskopischen Festkörpern an der Feder die Federcharakteristik empfindlich verändern können.

## Patentansprüche

1. Sicherheitsschließvorrichtung für Gasrohrleitungen mit einem entgegen der Kraft einer Feder (13) verschieblichen Ventilschließglied (5), welches gegen einen Ventilsitz (4) in einem rohrförmigen Gehäuse (1) mit einem Gaszuleitungsanschluß (2) preßbar ist, wobei das Ventilschließglied (5) mit einem Ringbord (10) bzw. Ringflansch an der dem Ventilsitz (4) abgewandten Seite ausgebildet ist, das Gehäuse (1) oder ein mit dem Gehäuse (1) verbundener Teil (14) einen ringförmigen Anschlag (11) aufweist, zwischen dem Ringbord (10) des Ventilschließgliedes (5) und dem ringförmigen Anschlag (11) eine Schraubenfeder (13) angeordnet ist, das Ventilschließglied (5) mit seinem Ringbord (10) und in dem dem ringförmigen Anschlag (11) benachbarten Bereich im Gehäuse (1) geführt ist und der Gaszuleitungsanschluß an der dem Ventilsitz (4) abgewandten Seite (2) der Stirnfläche des Ventilschließgliedes (5) mündet, **dadurch gekennzeichnet, daß** das Ventilschließglied (5) als hohlzylindrischer Körper ausgebildet ist und mit seinem Umfang im Gehäuse (1) bzw. an dem den ringförmigen Anschlag (11) tragenden Teil (14) geführt ist, wobei zwischen dem ringförmigen Anschlag (11) des Gehäuses (1) und dem Ringbord (10) bzw. Ringflansch des Ventilschließgliedes (5) eine geschlossene Ringkammer (12) ausgebildet ist, in welcher die Schraubenfeder (13) angeordnet ist, daß die dem Ventilsitz (4) zugewandte Stirnfläche des Ventilschließgliedes (5) konisch und/oder ballig gewölbt ausgebildet ist und radial außerhalb des Ventilsitzes (4) axiale Durchbrechungen (7) aufweist und daß die Sitzflächen des Ventilsitzes (4) hohlkonisch ausgebildet sind.

2. Sicherheitsschließvorrichtung nach Anspruch 1, **dadurch gekennzeichnet, daß** die radiale Höhe des ringförmigen Anschlages (11) des Gehäuses (1) im wesentlichen der radialen Höhe des Ringbordes (10) bzw. des Ringflansches des hohlzylindrischen Ventilschließgliedes (5) entspricht.

3. Sicherheitsschließvorrichtung nach Anspruch 1 oder 2, **dadurch gekennzeichnet, daß** die dem Ventilsitz (4) zugewandte Stirnfläche des Ventilschließgliedes (5) eine ringförmige Dichtfläche (9), insbesondere einen Elastomerring, trägt.

4. Sicherheitsschließvorrichtung nach Anspruch 1, 2 oder 3, **dadurch gekennzeichnet, daß** der ringförmige Anschlag (11) des Gehäuses (1) von einem im Gehäuse (1) axial verschiebbaren und festlegbaren, insbesondere schraubbaren, Stellring (14) gebildet ist.

5. Sicherheitsschließvorrichtung nach einem der Ansprüche 1 bis 4, **dadurch gekennzeichnet, daß** die Erzeugenden der hohlkonischen Wand des Ventilsitzes (4) einen spitzen Winkel αmiteinander einschließen, der kleiner oder gleich ist als der von den Erzeugenden (6) der Stirnwand des Ventilschließgliedes (5) im Bereich der Durchbrechungen (7) außerhalb der Dichtflächen eingeschlossene spitze Winkel β.

6. Sicherheitsschließvorrichtung nach einem der Ansprüche 1 bis 5, **dadurch gekennzeichnet, daß** an der dem Ventilsitz (4) abgewandten Seite der Stirnfläche des Ventilschließgliedes (5) ein konischer und/oder ballig gewölbter Anströmkörper (17) angeordnet ist.

7. Sicherheitsschließvorrichtung nach einem der Ansprüche 1 bis 6, **dadurch gekennzeichnet, daß** die Wandstärke des hohlzylindrischen Körpers des Ventilschließgliedes (5) weniger als 1/10, vorzugsweise weniger als 1/20, des Durchmessers des hohlzylindrischen Körpers beträgt.

8. Sicherheitsschließvorrichtung nach einem der Ansprüche 1 bis 7, **dadurch gekennzeichnet, daß** der lichte Durchtrittsquerschnitt des Ventilsitzes (4) kleiner ist als die lichte Querschnittsfläche an der dem Ventilschließglied (5) abgewandten Seite des Ventilsitzes (4).

9. Sicherheitsschließvorrichtung nach einem der Ansprüche 1 bis 8, **dadurch gekennzeichnet, daß** die Schraubenfeder (13) für einem Differenzdruck von zwischen 3 und 60 mbar entsprechende Federkräfte ausgelegt ist.

## Claims

1. A safety shut-off device for gas pipelines including a valve closing member (5) which is displaceable against the force of a spring (13) and pressable against a valve seat (4) provided in a tubular housing (1) having a gas supply connection (2), wherein the valve closing member (5) is configured to include an annular rim (10) or annular flange on its side facing away from the valve seat (4), the housing (1), or a portion (14) connected with the housing (1), includes an annular stop (11), a helical spring (13) is arranged between the annular rim (10) of the valve closing member (5) and the annular stop (11), the valve closing member (5) with its annular rim (10) is guided within the region of the housing (1) adjacent the annular stop (11), and the gas supply connection opens on the side (2) of the end face of the valve closing member (5) facing away from the valve seat (4), **characterized in that** the valve closing member (5) is designed as a hollow-cylindrical body and guided by its circumference within the housing (1) or on the portion (14) carrying the annular stop (11), wherein a closed annular chamber (12) is formed between the annular stop (11) of the housing (1) and the annular rim (10) or annular flange of the valve closing member (5), in which annular chamber the helical spring (13) is arranged, that the end face of the valve closing member (5) facing the valve seat (4) is designed to be conical and/or spherically arched and comprises axial bores (7) radially outwardly of said valve seat (4), and that the seating surfaces of the valve seat (4) are hollow-conically shaped.

2. A safety shut-off device according to claim 1, **characterized in that** the radial height of the annular stop (11) of the housing (1) corresponds essentially with the radial height of the annular rim (10), or annular flange, of the hollow-cylindrical valve closing member (5).

3. A safety shut-off device according to claim 1 or 2, **characterized in that** the end face of the valve closing member (5) facing the valve seat (4) carries an annular sealing surface (9) and, in particularly, an elastomer ring.

4. A safety shut-off device according to claim 1, 2 or 3, **characterized in that** the annular stop (11) of the housing (1) is comprised of an adjustment ring (14) axially displaceable and fixable, particularly screwable, within the housing (1).

5. A safety shut-off device according to any one of claims 1 to 4, **characterized in that** the generatrices of the hollow-conical wall of the valve seat (4) form with each other an acute angle α that is smaller than, or equal to, the acute angle β enclosed by the generatrices (6) of the end wall of the valve closing member (5) in the region of the bores (7) outside the sealing surfaces.

6. A safety shut-off device according to any one of claims 1 to 5, **characterized in that** a conical and/or spherically arched inflow body (17) is arranged on the side of the end face of the valve closing member (5) facing away from the valve seat (4).

7. A safety shut-off device according to any one of claims 1 to 6, **characterized in that** the wall thickness of the hollow-cylindrical body of the valve closing member (5) is less than 1/10, preferably less than 1/20, of the diameter of the hollow-cylindrical body.

8. A safety shut-off device according to any one of claims 1 to 7, **characterized in that** the clear passage cross section of the valve seat (4) is smaller than the clear cross sectional area on the side of the valve seat (4) facing away from the valve closing member (5).

9. A safety shut-off device according to any one of claims 1 to 8, **characterized in that** the helical screw (13) is designed for spring forces corresponding to a differential pressure ranging between 3 and 60 mbar.

## Revendications

1. Obturateur de sécurité pour conduites de gaz, comportant un organe de fermeture de soupape (5) mobile à l'encontre de la force d'un ressort (13), qui peut être pressé contre un siège de soupape (4) dans un boîtier tubulaire (1) comportant un raccord de conduite de gaz (2), l'organe de fermeture de soupape (5) étant réalisé avec un bord annulaire (10) ou une collerette annulaire au niveau du côté opposé au siège de soupape (4), le boîtier (1) ou une partie (14) reliée au boîtier (1) présentant une butée annulaire (11), un ressort à boudin (13) étant disposé entre le bord annulaire (10) de l'organe de fermeture de soupape (5) et la butée annulaire (11), l'organe de fermeture de soupape (5) étant guidé dans le boîtier (1) avec son bord annulaire (10) et dans la zone voisine de la butée annulaire (11) et le raccord de conduite de gaz débouchant au niveau du côté (2), opposé au siège de soupape (4), de la surface frontale de l'organe de fermeture de soupape (5), **caractérisé en ce que** l'organe de fermeture de soupape (5) est réalisé sous la forme d'un corps cylindrique creux et est guidé avec sa périphérie dans le boîtier (1) ou au niveau de la partie (14) comportant la butée annulaire (11), une chambre annulaire (12) fermée, dans laquelle est disposé le ressort à boudin (13), étant réalisée entre la butée annulaire (11) du boîtier (1) et le bord annulaire (10) ou la collerette annulaire de l'organe de fermeture de soupape (5), **en ce que** la surface frontale de l'organe de fermeture de soupape (5) tournée vers le siège de soupape (4) est réalisée de façon conique et/ou courbée à la façon d'une balle et présente des trous axiaux (7), et **en ce que** les surfaces de siège du siège de soupape (4) sont réalisées sous forme de cône creux.

2. Obturateur de sécurité selon la revendication 1, **caractérisé en ce que** la hauteur radiale de la butée annulaire (11) du boîtier (1) correspond sensiblement à la hauteur radiale du bord annulaire (10) ou de la collerette annulaire de l'organe de fermeture de soupape (5) cylindrique creux.

3. Obturateur de sécurité selon la revendication 1 ou 2, **caractérisé en ce que** la surface frontale de l'organe de fermeture de soupape (5) tournée vers le siège de soupape (4) comporte une surface d'étanchéité annulaire (9), en particulier une bague en élastomère.

4. Obturateur de sécurité selon la revendication 1, 2 ou 3, **caractérisé en ce que** la butée annulaire (11) du boîtier (1) est formée par une bague de réglage (14) mobile axialement dans le boîtier (1) et pouvant être fixée, en particulier vissée.

5. Obturateur de sécurité selon l'une des revendications 1 à 4, **caractérisé en ce que** les génératrices de la paroi conique creuse du siège de soupape (4) forment entre elles un angle aigu α inférieur ou égal à l'angle aigu β formé par les génératrices (6) de la paroi frontale de l'organe de fermeture de soupape (5) dans la zone des trous (7) à l'extérieur des surfaces d'étanchéité.

6. Obturateur de sécurité selon l'une des revendications 1 à 5, **caractérisé en ce qu'**au niveau du côté opposé au siège de soupape (4) de la face frontale de l'organe de fermeture de soupape (5) est disposé un corps d'écoulement (17) conique et/ou courbé à la façon d'une balle.

7. Obturateur de sécurité selon l'une des revendications 1 à 6, **caractérisé en ce que** l'épaisseur de paroi du corps cylindrique creux de l'organe de fermeture de soupape (5) est inférieure à 1/10, de préférence inférieure à 1/20, du diamètre du corps cylindrique creux.

8. Obturateur de sécurité selon l'une des revendications 1 à 7, **caractérisé en ce que** la section transversale de passage intérieure du siège de soupape (4) est inférieure à la surface de section transversale intérieure au niveau du côté du siège de soupape (4) opposé à l'organe de fermeture de soupape (5).

9. Obturateur de sécurité selon l'une des revendications 1 à 8, **caractérisé en ce que** le ressort à boudin (13) est conçu pour des élasticités correspondant à une pression différentielle comprise entre 3 et 60 mbars.
